Europäisches Patentamt

European Patent Office

Office européen des brevets

(19)

(11) Veröffentlichungsnummer: **0 433 878 B1**

(12) **EUROPÄISCHE PATENTSCHRIFT**

(45) Veröffentlichungstag der Patentschrift: **28.09.94**

(21) Anmeldenummer: **90124026.7**

(22) Anmeldetag: **13.12.90**

(51) Int. Cl.5: **C08G 18/48**, //C08J9/08, (C08G18/48,101:00)

(54) Verfahren zur Herstellung von flexiblen Polyurethan-Weichschaumstoffen mit viskoelastischen, körperschalldämpfenden Eigenschaften und hierzu verwendbare Polyoxyalkylen-polyol-Mischungen.

(30) Priorität: **21.12.89 DE 3942330**

(43) Veröffentlichungstag der Anmeldung: **26.06.91 Patentblatt 91/26**

(45) Bekanntmachung des Hinweises auf die Patenterteilung: **28.09.94 Patentblatt 94/39**

(84) Benannte Vertragsstaaten: **AT BE CH DE DK ES FR GB IT LI NL SE**

(56) Entgegenhaltungen:
EP-A- 0 075 758     EP-A- 0 296 449
EP-A- 0 433 889     DE-A- 3 710 731
FR-A- 2 129 823     FR-A- 2 268 036
GB-A- 974 169

(73) Patentinhaber: **BASF Aktiengesellschaft Carl-Bosch-Strasse 38 D-67063 Ludwigshafen (DE)**

(72) Erfinder: **Lutter, Heinz-Dieter, Dr. Helen-Keller-Weg 39 W-6903 Neckargemuend (DE)**
Erfinder: **Leppkes, Reinhard, Dr. Eschkopfstrasse 2 W-6712 Bobenheim-Roxheim (DE)**
Erfinder: **Horn, Peter, Dr. Neue Stuecker 15 W-6900 Heidelberg (DE)**
Erfinder: **Decker, Walter Koenigsbacher Strasse 72 W-6700 Ludwigshafen (DE)**
Erfinder: **Haase, Volker Tulpenweg 9 W-8891 Adelzhausen (DE)**
Erfinder: **Hinz, Werner, Dr. Hanns-Fay-Strasse 1 W-6710 Frankenthal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 433 878 B1

**Beschreibung**

Gegenstände der Erfindung sind ein Verfahren zur Herstellung von flexiblen Polyurethan-Weichschaumstoffen - im folgenden abgekürzt PU-Weichschaumstoffe genannt - mit viskoelastischen, körperschalldämpfenden Eigenschaften in einem Temperaturbereich von -20°C bis +80°C durch Umsetzung von

a) einer Polyoxyalkylen-polyol-Mischung, die enthält

ai) spezielle Blockpolyoxypropylen-polyoxyethylen-polyolgemische mit einer Hydroxyzahl von 14 bis 65 und einem Gehalt an endständig gebundenen Ethylenoxideinheiten von 2 bis 9 Gew.-%, die ihrerseits erhalten werden unter Verwendung einer Startermolekülmischung mit einer durchschnittlichen Funktionalität von 2,3 bis 2,8, bestehend aus Wasser und Glycerin oder Trimethylolpropan oder aus Wasser, Glycerin und Trimethylolpropan und

aii) mindestens ein di- und/oder trifunktionelles Polyoxypropylenpolyoxyethylen-polyol mit einem Gehalt an Oxethyleneinheiten von 60 bis 85 Gew.-% bezogen auf das Gesamtgewicht an polymerisierten Alkylenoxideinheiten, und einer Hydroxyzahl von 20 bis 80

b) gegebenenfalls niedermolekularen Kettenverlängerungsmitteln mit

c) organischen und/oder modifizierten organischen Polyisocyanaten

in Gegenwart von

Katalysatoren (d), Treibmitteln (e), Hilfsmitteln und/oder Zusatzstoffen (f)

sowie hierfür verwendbare Polyoxyalkylen-polyol-Mischungen (a).

Die Herstellung von PU-Weichschaumstoffen durch Umsetzung von höhermolekularen Polyhydroxylverbindungen und gegebenenfalls Kettenverlängerungsmitteln mit organischen Polyisocyanaten ist bekannt und wird in zahlreichen Patent- und Literaturpublikationen beschrieben.

Beispielhaft genannt seien das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, herausgegeben von Dr. G. Oertel.

Zur Herstellung der PU-Weichschaumstoffe werden üblicherweise verwendet: als höhermolekulare Polyhydroxylverbindungen Polyester-polyole und/oder Polyoxyalkylen-polyole auf der Grundlage von 1,2-Propylenoxid, Ethylenoxid oder Gemischen dieser Alkylenoxide sowie Mischungen aus derartigen Polyoxyalkylen-polyolen und Pfropf-polyoxyalkylen-polyolen, als Kettenverlängerungsmittel Alkandiole, Oxalkylenglykole oder hydroxyl- und/oder aminogruppenhaltige, niedermolekulare Verbindungen mit einer Funktionalität von 2 bis 4, wie z. B. Glycerin, Trimethylolpropan oder Alkanolamine, und als organische Polyisocyanate handelsübliche Toluylen-diisocyanate (TDI), Mischungen aus Diphenylmethan-diisocyanaten und Polyphenyl-polymethylen-polyisocyanaten (Roh-MDI) mit einem Diphenylmethandiisocyanat (MDI)-Isomerengehalt von mindestens 35 Gew.-% und Mischungen aus Roh-MDI und TDI.

Durch geeignete Wahl der Aufbaukomponenten und ihrer Mengenverhältnisse können PU-Weichschaumstoffe mit sehr guten mechanischen Eigenschaften, erhalten werden.

Nach Angaben der DE-C-1520737 (US-A-3 336 242) können PU-Schaumstoffe mit offener Zellstruktur hergestellt werden nach einem einstufigen Verfahren durch Umsetzung von Polyisocyanaten mit Polyoxypropylen-polyoxyethylentriolen mit Molekulargewichten von 3000 bis 8000, die als Endblock 3 bis 5 Gew.-% Ethylenoxid und als Startermolekül Glycerin gebunden enthalten.

Sehr weiche PU-Schaumstoffe erhält man nach GB-A-1 079 105 aus einem Polyether-polyol oder einer -mischung mit einer Hydroxylzahl von 70 bis 170, die enthält ein trifunktionelles Polyoxyalkylen-polyol, wie z. B. oxpropyliertes Glycerin und bis zu 40 Gew.-% eines Polyoxyalkylenglykols, z. B. oxpropyliertes Ethylenglykol, und einem organischen Polyisocyanat, bevorzugt TDI, in Gegenwart von Wasser und einem Fluorchlorkohlenwasserstoff, vorzugsweise Trichlorfluormethan, als Treibmittel.

Zur Minderung des Geräuschpegels von Maschinen oder Kraftfahrzeugen sind leichte, möglichst einfach verarbeitbare Werkstoffe und Verkleidungselemente mit körperschalldämpfenden Eigenschaften gefragt.

Als ein Material, das diese Forderungen bis zu einem gewissen Ausmaß erfüllt, sind poröse Polyurethane bekannt und auch im Einsatz. PU-Schaumstoffe eignen sich besonders gut für die Serienfertigung. Aufgrund der einfachen Herstellung bieten PU-Formschaumstoffe besonders günstige Voraussetzungen für die Optimierung der Akustik in Verkehrsmitteln.

Jedoch sind auch die Eigenschaften des Schallabsorbers Polyurethan noch in mehrfacher Hinsicht unbefriedigend:

So erfolgt der Entzug an Schallenergie bei starren Absorbern durch die Reibung der Luft in den Hohlräumen. Wenn eine Schalldämpfung bei tiefen Temperaturen gefordert ist, sind PU-Absorber mit hohen Schichtdicken erforderlich. Hohe Schichtstärken sind aus wirtschaftlichen Gründen und aus Gründen der Baugeometrie im Fahrzeugbau vielfach nicht realisierbar.

PU-Schaumstoffe mit Relaxationsverhalten, sogenannte viskoelastische PU-Schaumstoffe, wirken vorzugsweise aufgrund ihrer Matrixstruktur. Schallwellen versetzen das Polyurethangerüst in Schwingungen, wobei eine hohe Dämpfung und ein hoher E-Modul des PU-Schaumstoffs gefordert sind. Charakterisiert wird die Dämpfung durch den Verlustfaktor $\eta$, der durch die Gleichung

$$\eta = \frac{Wv}{2\pi \cdot Wr}$$

beschrieben wird, in der bedeuten:
Wv, die während einer Schwingungsperiode irreversibel in Wärme umgewandelte Schwingungsenergie und Wr, die reversible Schwingungsenergie.
Der Verlustfaktor $\eta$ gibt somit die während einer Schwingungsperiode irreversibel in Wärme umgewandelte Schwingungsenergie im Verhältnis zur reversiblen Schwingungsenergie an. Für eine gute Schalldämpfung ist ein Verlustfaktor von 0,3 und höher erforderlich, der über einen möglichst breiten Frequenzbereich wirksam sein soll.

Zur Erhöhung des Verlustfaktors von Pu-Schaumstoffen sind aus dem Stand der Technik unterschiedliche Methoden bekannt.

Nach Angaben der DE-B-2 756 622 (US 4 374 172) werden Platten oder streifenförmiges Schalldämm-Material aus offenporigem Schaumstoff, wie z.B. PU-Schaumstoff, über die Gesamtfläche mit unterschiedlichen Mengen einer viskoelastischen Masse, wie z.B. Polyolefinen, organischen Harzen oder Wachsen, die anorganische Füllstoffe, wie Kreide, Schiefermehl oder Schwerspat enthalten, getränkt. Nachteilig an dieser Methode ist das aufwendige Tränkungsverfahren.

Ein duroplastisches PU-Material mit hoher, temperaturempfindlicher Dämpfung wird gemäß DE-A-35 22 868 (US 4 605 681) hergestellt aus an sich bekannten Ausgangsstoffen für PU-Schaumstoffe, jedoch unter Mitverwendung von endständige Hydroxylgruppen aufweisenden Polybutadienen zur Erhöhung des Verlustfaktors. Aufgrund der leichten Autoxidierbarkeit der eingebauten Polybutadiene unterliegen derartige gegebenenfalls zellige PU-Materialien an der Luft unerwünschten mechanischen Eigenschaftsänderungen durch Autoxidationsprozesse.

Aus der DE-C-33 13 624 (GB 21 38 012) sind weiterhin PU-Weichschaumstoffe für Schallschutzzwecke mit einer Dichte von weniger als 90 kg/m$^3$, einem E-Modul von kleiner als 10$^6$ N/mm und einem Verlustfaktor von mindestens 0,3 mit in einem Temperaturbereich von -20 bis +80°C viskoelastischen Eigenschaften bekannt, die hergestellt werden aus organischen Polyisocyanaten oder Polyisocyanatprepolymeren und einem Polyolgemisch, das aus Polyethertriolen mit einem Molekulargewicht zwischen 4000 und 6500 und mindestens 15 Gew.%, bezogen auf das Polyolgemisch, eines Polyoxypropylentriols mit einer Hydroxylzahl von 180 bis 400 besteht. Durch diese Einschränkungen werden die Freiheitsgrade zur Gestaltung des mechanischen Eigenschaftsbildes der PU-Schaumstoffe so stark beschnitten, daß in zahlreichen Fällen die technische Lehre keine Anwendung finden kann.

PU-Weichschaumstoffe mit schallisolierenden und entdröhnenden Eigenschaften mit einer Dichte von 80 bis 250 kg/m$^3$, einem E-Modul von weniger als 300 000 N/mm und einem Verlustfaktor von mindestens 0,4 sowie einer adhäsiven Oberfläche werden nach Angaben der DE-A-37 10 731 hergestellt durch Umsetzung eines Polyisocyanats oder Polyisocyanatprepolymeren mit im überschuß vorliegenden Polyolen oder deren Gemischen unter Einhaltung eines NCO-Index von kleiner oder gleich 80 nach der RIM-Technik. Als geeignete Polyole werden Polyether-polyole genannt.

Kalthärtende PU-Weichformschaumstoffe mit guten Dämpfungseigenschaften werden gemäß EP-A-0 331 941 erhalten durch Umsetzung von Polyisocyanaten mit
i) mindestens einem mindestens zwei OH-Gruppen aufweisenden Polyether einer OH-Zahl von 20 bis 60 auf Basis von 75 bis 95 Gew.-% 1.2-Propylenoxid und 5 bis 25 Gew.-% Ethylenoxid,
ii) einem mindestens zwei OH-Gruppen aufweisenden Polyether oder Polyester einer OH-Zahl von 150 bis 400 und
iii) einem mindestens zwei OH-Gruppen aufweisenden Polyether oder OH-Zahl von 20 bis 200 auf Basis von 1.2-Propylenoxid und Ethylenoxid mit einem Ethylenoxidgehalt von über 50 Gew.-%, bezogen auf 1.2-Propylenoxid und Ethylenoxid
in Gegenwart von
Wasser und gegebenenfalls organischen Treibmitteln, Katalysatoren und gegebenenfalls Hilfs- und Zusatzstoffen.

Nach Angaben der FR-A-2 268 036 werden PU-Weichschaumstoffe mit verbesserten Elastizitätseigenschaften hergestellt in Abwesenheit von Silikon-Schaumstoffstabilisatoren durch Umsetzung von organischen Polyisocyanaten mit einer Mischung aus Polyetherolen, die besteht aus

a) mindestens einem Polyether-polyol mit einer Funktionalität von 2 bis 4, einem Äquivalentgewicht zwischen 1000 und 3000 und gegebenenfalls einem Ethylenoxidgehalt von bis 30 Gew.-% und

b) 0,5 bis 20 Gew.-%, bezogen auf a), mindestens eines Polyoxypropylen-polyoxyethylenalkohols mit einer Funktionalität von 1 bis 4, einem Äquivalentgewicht von 500 bis 5000 und einem Ethylenoxidgehalt von 30 bis 95 Gew.-%

in Gegenwart von Katalysatoren und Treibmitteln.

PU-Weichschaumstoffe mit einer adhäsiven Oberfläche und einem Verlustfaktor von über 0,4 auf der Grundlage von Polyether-polyolen, vorzugsweise solchen aus Ethylenoxid und/oder Propylenoxid, und 4,4'-Diphenylmethan-diisocyanaten, werden ferner beschrieben in der DE-A-37 10 731. Nach Angaben dieser Patent-publikation sind die Dämpfungseigenschaften abhängig vom Isocyanatindex, der vorteilhafterweise zwischen 80 und 50 liegt.

Obgleich nach den beispielhaft genannten Verfahren PU-Weichschaumstoffe mit befriedigenden viskoelastischen Eigenschaften, die durch den E-Modul und den Verlustfaktor charakterisiert werden, hergestellt werden können, bedürfen auch diese Schaumstoffe der Verbesserung, insbesondere im Hinblick auf die unterschiedlichen Anwendungsgebiete.

Die Aufgabe der vorliegenden Erfindung bestand darin, flexible PU-Weich-schaumstoffe mit viskoelastischen Eigenschaften herzustellen, die sich durch einen hohen E-Modul bei einem zugleich außerordentlich hohen Verlustfaktor auszeichnen und sich insbesondere eignen zur Bildung körperschallabsorbierender Formkörper. Bei der Verschäumung sollte auf die Verwendung von Fluorchlorkohlenwasserstoffen, die in Verdacht stehen die Ozonschicht zu schädigen, als Treibmittel vollständig oder zumindest weitgehend verzichtet werden, ohne die mechanischen Eigenschaften der erhaltenen Schaumstoffe nachteilig zu beeinflussen. Als organische Polyisocyanate sollten bevorzugt die schwerflüchtigen gegebenenfalls modifizierten MDI-Isomeren oder Roh-MDI Anwendung finden.

Diese Aufgabe konnte überraschenderweise gelöst werden durch die Verwendung einer Polyoxyalkylenpolyol-Mischung aus speziell strukturierten Polyoxypropylen-polyoxyethylen-polyolen als höhermolekulare Verbindung mit mindestens zwei reaktiven Wasserstoffatomen zur Herstellung der flexiblen PU-Weichschaumstoffe.

Gegenstand der Erfindung ist somit ein Verfahren zur Herstellung von flexiblen Polyurethan-Weichschaumstoffen mit einem Verlustfaktor nach DIN 53 426 im Bereich von 0,7 bis 1,5 durch Umsetzung von

a) mindestens difunktionellen Polyoxyalkylen-polyolen und gegebenenfalls

b) polyfunktionellen Kettenverlängerungsmitteln mit Molekulargewichten von 18 bis 400 mit

c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate,

in Gegenwart von

d) Katalysatoren,

e) Treibmitteln, ausgewählt aus der Gruppe Wasser, der organischen Carbonsäuren und gegenüber Polyisocyanaten inerten Flüssigkeiten mit Siedepunkten unter 100 °C,

sowie gegebenenfalls

f) Hilfsmitteln und/oder Zusatzstoffen,

das dadurch gekennzeichnet ist, daß man als Polyoxyalkylen-polyole (a) eine Mischung verwendet aus

ai) einem Blockpolyoxypropylen-polyoxyethylen-polyolgemisch mit einer Hydroxylzahl von 14 bis 65 und einem Gehalt an endständig gebundenen Ethylenoxideinheiten von 2 bis 9 Gew.-% bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt und

aii) mindestens einem di- und/oder trifunktionellen Polyoxypropylen-polyoxyethylen-polyol mit einem Gehalt an Oxethyleneinheiten von 60 bis 85 Gew.-%, bezogen auf das Gesamtgewicht an polymerisierten Alkylenoxideinheiten, und einer Hydroxylzahl von 20 bis 80.

Ein weiterer Gegenstand der Erfindung ist ein mehrstufiges Verfahren zur Herstellung von flexiblen Polyurethan-Weichschaumstoffenmit einem Verlustfaktor nach DIN 53 426 im Bereich von 0,7 bis 1,5, das dadurch gekennzeichnet ist, daß man

1. in der ersten Reaktionsstufe an eine Startermolekülmischung mit einer durchschnittlichen Funktionalität von 2,3 bis 2,8 aus Wasser und Glycerin und/oder Trimethylolpropan in Gegenwart mindestens eines basischen Katalysators bei erhöhter Temperatur 1,2-Propylenoxid und an das erhaltene Polyoxypropylenaddukt Ethylenoxid in einer solchen Menge polymerisiert, daß das erhaltene Blockpolyoxypropylen-polyoxyethylen-polyolgemisch (ai) eine Hydroxylzahl von 14 bis 65 und einen Gehalt an endständig gebundenen Ethylenoxideinheiten von 2 bis 9 Gew.-%, bezogen auf das Gewicht der Polyoxypropyleneinheiten, besitzt,

2. in der zweiten Reaktionsstufe

ai) das erhaltene Blockpolyoxypropylen-polyoxyethylen-polyolgemisch (ai) mit

aii) mindestens einem di- und/oder trifunktionellen Polyoxypropylen-polyoxyethylen-polyol mit einem Gehalt an Oxethyleneinheiten von 60 bis 85 Gew.-%, bezogen auf das Gesamtgewicht an polymerisierten Alkylenoxideinheiten, und einer Hydroxylzahl von 20 bis 80 und

b) gegebenenfalls polyfunktionellen Kettenverlängerungsmitteln mit Molekulargewichten von 18 bis 400 mischt und

3. in einer dritten Reaktionsstufe die erhaltene Mischung mit

c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate

in Gegenwart von

d) Katalysatoren,

e) Treibmitteln, ausgewählt aus der Gruppe Nasser, der organischen Carbonsäuren und gegenüber Polyisocyanaten inerten Flüssigkeiten mit Siedepunkten unter 100°C,

sowie gegebenenfalls

f) Hilfsmitteln und/oder Zusatzstoffen

zur Reaktion bringt.

Ein anderer Gegenstand der Erfindung sind Polyoxyalkylen-polyol-Mischungen, die enthalten oder vorzugsweise bestehen aus, bezogen auf das Gesamtgewicht,

ai) 10 bis 40 Gew.-% eines Blockpolyoxypropylen-polyoxyethylen-polyolgemisches mit einer Hydroxylzahl von 14 bis 40 und einem Gehalt an endständig gebundenen Ethylenoxideinheiten von 3 bis 8 Gew.-%, bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und Polymerisation von Ethylenoxid an das erhaltene Polyoxypropylenaddukt und

aii) 60 bis 90 Gew.-% mindestens eines di- und/oder trifunktionellen Polyoxypropylen-polyoxyethylen-polyols mit einem Gehalt an Oxethyleneinheiten von 60 bis 85 Gew.-% und einer Hydroxylzahl von 20 bis 80, wobei die Gew.-% bezogen sind auf das Gesamtgewicht an polymerisierten Alkylenoxideinheiten.

Da durch die bevorzugte Verwendung von Wasser zur Bildung von Kohlendioxid als Treibmittel bei der Umsetzung mit den organischen Polyisocyanaten Harnstoffgruppen gebildet werden, die die Stauchhärte des hergestellten PU-Schaumstoffs erhöhen, war überraschend und nicht vorhersehbar, daß durch die Verwendung der neuen Polyoxyalkylenpolyol-Mischung dieses Verhalten nicht nur kompensiert wird, sondern vielmehr PU-Weichschaumstoffe mit geringer Stauchhärte und gleichzeitig sehr guten viskoelastischen Eigenschaften, insbesondere einem höheren Verlustfaktor erhalten werden, die sich ferner durch gute andere mechanische Eigenschaften wie z.B. Zugfestigkeit, Dehnung, Weiterreißfestigkeit und Druckverformungsrest, auszeichnen.

Zur Herstellung der neuen, erfindungsgemäßen verwendbaren Polyoxyalkylenpolyol-Mischungen (a), insbesondere zu den hierfür geeigneten Blockpolyoxypropylen-polyoxyethylen-polyolgemischen

(ai) und zu den für das erfindungsgemäße Verfahren verwendbaren anderen Ausgangskomponenten ist im einzelnen folgendes auszuführen:

a) Als mindestens difunktionelle Polyoxyalkylen-polyole finden erfindungsgemäß Polyoxyalkylen-polyol-Mischungen (a) Verwendung, die enthalten oder vorzugsweise bestehen aus

ai) einem Blockpolyoxypropylen-polyoxyethylen-polyolgemisch mit einer Hydroxylzahl von 14 bis 65, vorzugsweise von 14 bis 40 und insbesondere von 20 bis 35 und einem Gehalt an endständig gebundenen Ethylenoxideinheiten von 2 bis 9 Gew.-%, vorzugsweise von 3 bis 8 Gew.-% und insbesondere von 5 bis 7 Gew.-%, bezogen auf das Gewicht der Polyoxypropyleneinheiten, das hergestellt wird durch anionische Polymerisation bei erhöhten Temperaturen von 1.2-Propylenoxid aus eine Startermolekülmischung mit einer durchschnittlichen Funktionalität von 2,3 bis 2,8, vorzugsweise von 2,3 bis 2,7 und insbesondere von 2,5 bis 2,7 aus Wasser und Glycerin und/oder Trimethylolpropan und Polymerisation von Ethylenoxid an das erhaltene Polyoxypropylenaddukt und

aii) mindestens einem di- und/oder vorzugsweise trifunktionellen Polyoxypropylen-polyoxyethylen-polyol mit einem Gehalt an Oxyethyleneinheiten von 60 bis 85 Gew.-%, vorzugsweise von 70 bis 80 Gew.-%

und insbesondere 73 bis 78 Gew.-% bezogen auf das Gesamtgewicht an polymerisierten Alkylenoxideinheiten, und einer Hydroxylzahl von 20 bis 80, vorzugsweise von 25 bis 60 und insbesondere von 25 bis 45, wobei von den genannten Oxethyleneinheiten 0 bis 20 Gew.-% vorzugsweise 2 bis 15 Gew.-% und insbesondere 3 bis 8 Gew.-% endständig gebunden sind.

Besonders bewährt haben sich und daher zweckmäßigerweise Anwendung finden Polyoxyalkylen-polyol-Mischungen (a) die enthalten oder vorzugsweise bestehen, bezogen auf das Gewicht von (ai) und (aii),

(ai) 10 bis 90 Gew.-%, vorzugsweise 10 bis 40 Gew.-% und insbesondere 12 bis 30 Gew.-% des Blockpolyoxypropylen-polyoxyethylen-polyolgemisches (ai) und

(aii) 10 bis 90 Gew.-%, vorzugsweise 60 bis 90 Gew.-% und insbesondere 70 bis 88 Gew.-% des di- und/oder trifunktionellen Polyoxypropylen-polyoxyethylen-polyols (aii) mit einem Gehalt an Oxethyleneinheiten von 60 bis 85 Gew.-%, bezogen auf das Gesamtgewicht an polymerisierten 1.2-Propylenoxid- und Ethylenoxid-einheiten.

Wie bereits dargelegt wurde, besitzen die erfindungsgemäß geeigneten Blockpolyoxypropylen-polyoxyethylen-polyolgemische (ai) eine Hydroxylzahl bis 65 und einen Gehalt an endständig gebundenen Ethylenoxideinheiten von 2 bis 9 Gew.-%, bezogen auf das Gewicht der Polyoxypropyleneinheiten. Eine Erhöhung der Hydroxylzahl über 65 würde ebenso wie eine Erhöhung des Ethylenoxidgehalts im Endblock auf Werte größer als 10 Gew.-% zu einer zunehmenden Verhärtung der PU-Weichschaumstoffe, verbunden mit einer Erhöhung der Stauchhärte, führen. Wird hingegen der Gehalt an Ethylenoxid auf kleiner als 2 Gew.-% vermindert oder werden Polyoxypropylen-polyole verwendet, so wird die Reaktivität der Polyoxyalkylen-polyole stark reduziert und gleichzeitig ihre Empfindlichkeit deutlich erhöht, so daß die hieraus hergestellten PU-Weichschaumsysteme nur in engen Reaktionsbereichen verhältnismäßig problemlos verarbeitet werden können.

Als Startermoleküle zur Herstellung der Blockpolyoxypropylen-polyoxyethylen-polyolgemische (ai) finden Mischungen aus Wasser und Trimethylolpropan oder Glycerin, aus Wasser, Trimethylolpropan und Glycerin und vorzugsweise aus Wasser und Glycerin Verwendung. Zweckmäßigerweise wird das Wasser und Glycerin und/oder Trimethylolpropan in Molverhältnissen von 2,3 : 1 bis 1 : 4, vorzugsweise von 2 : 1 bis 1 : 2,5 und insbesondere von 1 : 1 bis 1 : 2,5 verwendet, wobei die Gesamtmenge der Mischung aus Glycerin und Trimethylolpropan dem Molverhältnis eines Alkantriols entspricht. Verwendet man anstelle der erfindungsgemäß geeigneten Startermolekülmischung dreiwertige Alkohole als Starter, so erhält man PU-Weichschaumstoffe mit erhöhter Stauchhärte.

Die Blockpolyoxypropylen-polyoxyethylen-polyolgemische (ai) werden zweckmäßigerweise durch anionische Polymerisation von 1,2-Propylenoxid an die Startermolekülmischung und anschließende Polymerisation von Ethylenoxid an das erhaltene Polyoxypropylenaddukt in Gegenwart von basischen Katalysatoren bei erhöhten Temperaturen und Atmosphärendruck oder erhöhtem Druck hergestellt. Als geeignete Katalysatoren seien Alkalihydroxide, wie z. B. Natrium- oder vorzugsweise Kaliumhydroxid, und Alkalialkoholate, wie Natriummethylat, Natrium- oder Kaliumethylat oder Kaliumisopropylat, beispielhaft genannt. Zur Herstellung der Blockpolyoxypropylen-polyoxyethylen-polyolgemische (ai) werden zunächst das Glycerin und/oder Trimethylolpropan in die entsprechenden Alkoholate übergeführt. Je nach Art des verwendeten Katalysators wird das dabei gebildete Wasser teilweise oder der gebildete niedrig siedende Alkohol vollständig abdestilliert. Nach einer bevorzugt angewandten Ausführungsform wird zunächst das Trimethylolpropan und/oder vorzugsweise das Glycerin in das Alkoholat übergeführt unter vollständiger Abtrennung des gebildeten Wassers oder niedrigsiedenden Alkohols. Danach wird eine wäßrige Alkalihydroxidlösung in der erforderlichen Menge zur Einstellung der erforderlichen Funktionalität der Startermolekülmischung dem gebildeten Alkoholat einverleibt. Bei einer Temperatur von 90 bis 150°C, vorzugsweise 100 bis 130°C wird nun das 1,2-Propylenoxid in dem Maße wie es abreagiert bei Normaldruck oder unter erhöhtem Druck bei 1,1 bis 20 bar, vorzugsweise 1,1 bis 7 bar eingetragen. Nach beendeter Propoxylierung kann unmittelbar mit Ethylenoxid der endständige Ethylenoxidblock anpolymerisiert werden. Nach dem vorzugsweise angewandten Herstellungsverfahren wird jedoch nach beendeter Propoxylierung das nicht umgesetzte 1,2-Propylenoxid unter vermindertem Druck vollständig abdestilliert und danach unter den obengenannten Reaktionsbedingungen ethoxiliert. Je nach den gewählten Temperatur- und Druckbedingungen sind für die Propoxilierungs- und Ethoxilierungsreaktlon Reaktionszeiten von 4 bis 30 Stunden, vorzugsweise 6 bis 10 Stunden erforderlich. Nach beendeter Ethoxylierung wird gegebenenfalls überschüssiges, nicht abreagiertes Ethylenoxid bei einer Temperatur von 100 bis 150°C unter vermindertem Druck abgetrennt.

Die alkalihaltigen Blockpolyoxypropylen-polyoxyethylen-polyolgemische können z. B. durch Zugabe von anorganischen Säuren, wie z. B. Schwefel-, Phosphor- oder Kohlensäure, organische Säuren, wie z. B. Zitronensäure, Essigsäure, Ameisensäure u.a. oder Ionenaustauscherharze neutralisiert und gegebenenfalls durch Zugabe von Adsorptionsmittel nach bekannten Methoden gereinigt werden.

Geeignete di- und/oder vorzugsweise trifunktionelle Polyoxypropylen-polyoxyethylen-polyole (aii), die überwiegend Oxethyleneinheiten gebunden haben, können nach bekannten Verfahren, beispielsweise nach der oben beschriebenen anionischen Polymerisation in Gegenwart von basischen Katalysatoren und unter Verwendung von di- und/oder trifunktionellen Startermolekülen aus 1,2-Propylenoxid und Ethylenoxid hergestellt werden.

Als Startermolekül kommen beispielsweise in Betracht: Wasser, organische Dicarbonsäuren, wie z.B. Bernstein-, Glutar-, Adipin-, Phthal- und Terephthalsäure, Alkanolamine, wie z.B. Ethanolamin, Dialkanolamine, wie z.B. Diethanolamin, Diisopropanolamin, N-Alkyl-dialkanolamine, wie z.B. N-Methyl- und N-Ethyl-diethanolamin, Trialkanolamin, wie Triethanolamin und Triisopropanolamin und Ammoniak. Vorzugsweise verwendet werden zwei- und insbesondere dreiwertige Alkohole, Alkylenglykole und Mischungen davon, wie z.B. Ethandiol, Propandiol-1,2 oder -1,3, Diethylen-, Dipropylenglykol, Butandiol-1,4, Mexandiol-1,6, Trimethylolpropan und insbesondere bevorzugt Glycerin.

Die Polyoxypropylen-polyoxyethylen-polyole können einzeln oder in Form von Mischungen verwendet werden, wobei die mittelständigen Alkylenoxideinheiten entweder in statistischer Verteilung oder blockweise angeordnet sein können. Insbesondere eingesetzt werden-jedoch Polyoxypropylen-polyoxyethylen-polyole mit bis 20 Gew.-%, vorzugsweise 2 bis 15 Gew.-% und insbesondere 3 bis 8 Gew.% Ethylenoxid, bezogen auf das Gesamtgewicht der Alkylenoxide, im Endblock, die einen Gehalt an primären Hydroxylgruppen von über 50 %, vorzugsweise über 60 % besitzen. Polyoxyalkylen-polyole der genannten Art werden z. B. beschrieben in der DE-C-1 520 737 (US-A-3 336 242) und DE-A-1 570 885 (GB-A-1 120 223).

Besonders bewährt haben sich Polyoxyalkylen-polyol-Mischungen (a), die, bezogen auf das Gesamtgewicht, bestehen aus

ai) 10 bis 40 Gew.% eines Blockpolyoxypropylen-polyoxyethylen-polyolgemisches mit einer Hydroxylzahl von 14 bis 40 und einem Gehalt an endständig gebundenen Ethylenoxideinheiten von 3 bis 8 Gew.-%, bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,7 aus Wasser und Glycerin und Polymerisation von Ethylenoxid an das erhaltene Polyoxypropylenaddukt und

aii) 60 bis 90 Gew.% mindestens eines di- und/oder trifunktionellen Polyoxypropylen-polyoxyethylen-polyols mit einem Gehalt an Oxethyleneinheiten von 60 bis 85 Gew.-%, von denen bis zu 20 Gew.% endständig gebunden sind, und einer Hydroxylzahl von 20 bis 80, wobei die Gew.-% bezogen sind auf das Gesamtgewicht an polymerisierten Alkylenoxideinheiten, wobei insbesondere bevorzugt solche Polyoxyalkylen-polyol-Mischungen (a) sind, die als Aufbaukomponente (aii) ein mit Glycerin gestartetes Polyoxypropylen-polyoxyethylen-polyol mit einem Gehalt an Oxethyleneinheiten von 70 bis 80 Gew.% enthalten, von denen 2 bis 15 Gew.% endständig gebunden sind und einer Hydroxylzahl von 25 bis 60, wobei die Gew.-% bezogen sind auf das Gesamtgewicht an polymerisierten Alkylenoxideinheiten.

b) Gegebenenfalls kann es zur Modifizierung der mechanischen Eigenschaften der flexiblen, viskoelastischen, körperschalldämpfenden PU-Weichschaumstoffe zweckmäßig sein, neben den erfindungsgemäß notwendigen Polyoxyalkylen-polyol-Mischungen (a) zu ihrer Herstellung zusätzlich niedermolekulare Kettenverlängerungsmittel (b) mitzuverwenden. Als derartige Mittel kommen polyfunktionelle, insbesondere di- und trifunktionelle Verbindungen mit Molekulargewichten von 18 bis ungefähr 400, vorzugsweise von 62 bis ungefähr 300 in Betracht. Verwendet werden beispielsweise Di- und/oder Trialkanolamine, wie z. B. Diethanolamin und Triethanolamin, aliphatische Diole und/oder Triole mit 2 bis 6 Kohlenstoffatomen im Alkylenrest, wie z. 8. Ethan-, 1,3-Propan-, 1,4-Butan-, 1,5-Pentan-, 1,6-Hexan-, 1,7-Heptandiol, Glycerin und/oder Trimethylolpropan und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen wie z. B. 1,2-Ethan-, 1,4-Butan-, 1,6-Hexandiamin, 2,3-, 2,4- und/oder 2,6-Toluylen-diamin, 4,4'-Diamino-diphenylmethan, 3,3,-di- und/oder 3,3',5,5'-tetraalkyl-substituierten 4,4'-Diamino-diphenylmethanen als Startermolekülen und Alkylenoxid oder -gemischen. Als Kettenverlängerungsmittel (b) vorteilhafterweise eingesetzt werden Dialkanolamine, Triole und/oder vorzugsweise Alkandiole und insbesondere bevorzugt sind Diethanolamin, 1,2-Ethandiol, 1,3-Propandiol, 1,4-Butandiol, 1,6-Hexandiol und 1,7-Heptandiol.

Die Kettenverlängerungsmittel (b), die vorzugsweise zur Herstellung der PU-Weichschaumstoffe mitverwendet werden, kommen zweckmäßigerweise in Mengen von 1 bis 60 Gew.-Teilen, vorzugsweise von 1 bis 10 Gew.-Teilen pro 100 Gew.-Teilen der Polyoxyalkylen-polyol-Mischung zur Anwendung

c) Zur Herstellung der flexiblen, viskoelastischen, körperschalldämpfenden PU-Weichschaumstoffe eignen sich die bekannten organischen, z.B. aliphatischen, cycloaliphatischen, araliphatischen, cycloaliphatisch-aromatischen und vorzugsweise aromatischen Di- und/oder Polyisocyanate. Im einzelnen seien als aromatische Polyisocyanate beispielhaft genannt: Mischungen aus 4,4'- und 2,4'-MDI, Roh-MDI mit einem Gehalt an MDI-Isomeren von mindestens 35 Gew.-%, vorzugsweise von 50 bis 90 Gew.% und mehr, bezogen auf das Gesamtgewicht der Mischung, 2,4- und 2,6-Toluylen-diisocyanat sowie die entsprechenden handelsüblichen Isomerenmischungen, Mischungen aus Toluylen-diisocyanaten und MDI und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.

Geeignet sind auch sogenannte modifizierte mehrwertige Isocyanate, d. h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.%, vorzugsweise von 12 bis 3,5 Gew.% oder Quasiprepolymere mit einem NCO-Gehalt von 35 bis 14 Gew.%, vorzugsweise von 34 bis 22 Gew.%, wobei mit Urethangruppen modifizierte Polyisocyanate aus Toluylen-diisocyanaten, insbesondere einem NCO-Gehalt von 34 bis 28 Gew.% und solche aus 4,4'-MDI, 4,4'- und 2,4'-MDI-Isomerenmischungen oder Roh-MDI, insbesondere einen NCO-Gehalt von 28 bis 22 Gew.%, bezogen auf das Gesamtgewicht, aufweisen und hergestellt werden durch Umsetzung von Diolen, Oxalkylen-glykolen und/oder Polyoxyalkylenglykolen mit Molekulargewichten von 62 bis 6000, vorzugsweise von 134 bis 4200 mit Toluylen-diisocyanaten, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder Toluylen-diisocyanat-Basis.

Besonders bewährt haben sich jedoch und daher vorzugsweise Anwendung finden Mischungen aus 4,4'- und 2,4'-MDI, Roh-MDI mit einem Gehalt an MDI von mindestens 35 Gew.-%, bezogen auf das Gesamtgewicht, Mischungen aus 4,4'- und 2,4'-MDI und Gemischen aus 2,4- und 2,6-TDI, Mischungen aus Roh-MDI und Gemischen aus 2,4- und 2,6-TDI, Urethangruppen enthaltende Polyisocyanatmischungen mit einem NCO-Gehalt von 28 bis 14 Gew.-%, bezogen auf das Gesamtgewicht, auf der Grundlage von MDI und/oder Roh-MDI.

d) Zur Beschleunigung der Umsetzung der Polyoxyalkylen-polyol-Mischungen (a), Wasser als Treibmittel (e) und gegebenenfalls Kettenverlängerungsmittel (b) mit den organischen Polyisocyanaten und/oder modifizierten Polyisocyanaten (c) werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N'N'-Tetramethyldiamino-diethylether, Bis-(dimethylaminopropyl)-harnstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, N,N',N''-Tris-(dialkylaminoalkyl)-hexahydrotriazin, z. B. N,N',N''-Tris-(dimethylaminopropyl)-s-hexahydrotriazin und insbesondere Triethylendiamin. Geeignet sind jedoch auch Metall-Salze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.-%, vorzugsweise 0,3 bis 3 Gew.-% Katalysator auf Basis tertiärer Amine und/oder 0,01 bis 0,5 Gew.-%, vorzugsweise 0,03 bis 0,25 Gew.-% Metallsalze, bezogen auf das Gewicht der Polyoxyalkylenpolyole-Mischung (a)

e) Zu Treibmitteln (e), welche zur Herstellung der PU-Weichschaumstoffe verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyoxyalkylen-polyol-Mischung (a).

Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (c) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, insbesondere technische Gemische aus n- und iso-Pentanen, n- und iso-Butan und Propan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Trifluormethan, Difluormethan, Difluorethan, Tetrafluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z. B. Ameisensäure, Essigsäure, Oxalsäure, Ricinolsäure und andere carboxylgruppenhaltige Verbindungen.

Die neben wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile der Polyoxyalkylen-polyol-Mischung (a). Gegebenenfalls kann es zweckmäßig sein, die gegebenenfalls modifizierten Polyisocyanate (c) mit dem inerten physikalisch wirkenden Treibmittel zu mischen und dadurch die Viskosität zu verringern.

f) Der Reaktionsmischung zur Herstellung der PU-Weichschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen und insbesondere Copolymerisate mit einem K-Wert von 5 bis 80, gemessen als 0,5 gew.%ige Lösung in Isopropanol bei 25°C, hergestellt in Gegenwart von Polymerisationsinitiatoren durch radikalische Polymerisation von

A) 20 bis 80 Gew.%, bezogen auf das Gesamtgewicht der Monomeren (A) und (B), mindestens eines olefinisch ungesättigten Polyoxyalkylenalkohol- oder Polyesteralkoholaddukts,

B) 80 bis 20 Gew.%, bezogen auf das Gesamtgewicht der Monomeren (A) und (B), mindestens eines Vinylmonomeren ausgewählt aus der Gruppe N-Vinyl-formamid, N-Vinyl-2-pyrrolidon, N-Vinyl-2-piperidon,, N-Vinyl-2-caprolactam, -N-Vinyl-imidazol, N-Vinyl-2-ethylenharnstoff und N-Vinyl-2-propylenharnstoff,

C) 0,05 bis 40 Gew.-Teilen, bezogen auf 100 Gew.-Teile der Monomeren (A) und (B), Glycidylacrylat, Glycidylmethacrylat oder Mischungen davon,

D) 0 bis 10 Gew.-Teilen, bezogen auf 100 Gew.-Teile der Monomeren (A) und (B), mindestens einer $\alpha,\beta$-monoolefinisch ungesättigten Carbonsäure und

E) 0 bis 30 Gew.-Teilen, bezogen auf 100 Gew.-Teile der Monomeren (A) und (B), mindestens eines olefinisch ungesättigten Carbonsäureamids und/oder -esters und/oder Styrol.

Copolymerisate der genannten Art werden beschrieben in der DE-A-38 38 030.

Die oberflächenaktiven Substanzen werden üblicherweise in Mengen von 0,01 bis 5 Gew.-Teilen, bezogen auf 100 Gew.-Teile der Polyoxyalkylen-polyole (a), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Zeolithe, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris(2-chlorethyl)phoshat, Tris(2-chlorpropyl)phosphat, Tris(1,3-dichlorpropyl)phosphat, Tris(2,3-dibrompropyl)phosphat und Tetrakis(2-chlorethyl)ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Weichschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Weichschaumstoffe werden die organischen, gegebenenfalls modifizierten Polyisocyanate (c), die Polyoxyalkylen-polyol-Mischungen (a) und gegebenenfalls Kettenverlängerungsmittel (b) in Gegenwart von Katalysatoren (d), Treibmitteln (e), und gegebenenfalls Hilfsmitteln und/oder Zusatzstoffen (f) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,6 und insbesondere ungefähr 1 bis 1,25 reaktive Wasserstoffatome gebunden an die Ausgangskomponente (a) und gegebenenfalls (b) vorliegen und das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die PU-Weichschaumstoffe werden zweckmäßigerweise nach dem one shot-Verfahren durch Vermischen von zwei Komponenten A und B hergestellt, wobei die Ausgangskomponenten (a), (d), (e) und gegebenenfalls (b) und (f) zu der sogenannten A-Komponente vereinigt und als B-Komponente die Ausgangskomponente (c) gegebenenfalls im Gemisch mit (f) und inerten, physikalisch wirkenden Treibmitteln verwendet werden. Da die A-Komponente mindestens 6 Monate lagerstabil ist, müssen die A- und B-Komponente vor Herstellung der PU-Weichschaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Das erfindungsgemäße Verfahren eignet sich auch zur Herstellung von PU-Weichformschaumstoffen. Die Reaktionsmischung wird hierzu mit einer Temperatur von 15 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z. B. bei Verdichtungsgraden von 1,1 bis 8, vorzugsweise von 2 bis 6 und insbesondere 2,2 bis 4 in dem geschlossenen Formwerkzeug aushärten.

Die nach dem erfindungsgemäßen Verfahren hergestellten flexiblen PU-Weichschaumstoffe besitzen Dichten von 40 bis 110 g/Liter, vorzugsweise 65 bis 90 g/Liter und insbesondere 70 bis 80 g/Liter und zeichnen sich durch eine geringe Stauchhärte, sehr gute viskoelastische Eigenschaften, insbesondere einen Verlustfaktor nach DIN 53 426 im Bereich von 0,7 bis 1,5, bei guten anderen mechanischen Eigenschaften aus.

Die neuen Polyoxyalkylen-polyol-Mischungen, bestehend aus dem Blockpolyoxypropylen-polyoxyethylen-polyolgemisch (ai) und di- und/oder trifunktionellen Polyoxypropylen-polyoxyethylen-polyol (aii) eignen sich zur Herstellung von flexiblen PU-Weichschaumstoffen mit in einem Temperaturbereich von -20°C bis +80°C viskoelastischen, körperschalldämpfenden Eigenschaften.

Die nach dem erfindungsgemäßen Verfahren hergestellten flexiblen PU-Weichschaumstoffe und PU-Formweichschaumstoffe finden Verwendung im Haushaltssektor, z.B. für die Teppichhinterschäumung zur Trittschalldämmung, als Verkleidungselemente und in der Automobilindustrie als körperschalldämpfende Materialien, z.B. zur Abkapselung des Motorraums oder zur Verminderung der Fahrzeuginnengeräusche durch mit diesen Schaumstoffen hinterschäumten Deckschichten.

Beispiele

Herstellung der Blockpolyoxypropylen-polyoxyethylen-polyolgemische (ai)

Beispiel 1

2,2 Gew.-Teile Glycerin wurden in einem Reaktor vorgelegt und mit 1,9 Gew.-Teilen einer 47 gew.-%igen wäßrigen Kaliumhydroxidlösung gemischt. Diese Mischung wurde zur Entfernung des eingebrachten und bei der Alkoholatbildung entstehende wasser unter vermindertem Druck (0,1 - 0,01 bar) bei einer Temperatur von 80°C solange entwässert (ungefähr 1 stunde) bis das Molverhältnis der Mischung von Glycerin in Glycerolatform zu Wasser 1 : 2 betrug (durchschnittliche Funktionalität der Startermolekülmischung 2,33). Anschließend wurden 188 Gew.-Teile 1,2-Propylenoxid bei einer Temperatur von 110°C und einem maximalen Druck von 4,5 bar über einen Zeitraum von ungefähr 8 Stunden zugeführt. Nach Beendigung der 1,2-Propylenoxidzugabe und einer Nachreaktionszeit von ungefähr 3 Stunden, wurde das Reaktionsgemisch zur Entfernung des nicht umgesetzten 1,2-Propylenoxids, bei 110°C und 0,01 bar gestrippt.

12 Gew.-Teilen Ethylenoxid wurden danach bei 105°C und einem maximalen Druck von 5 bar über einen Zeitraum von 2 Stunden zudosiert. Nach Abreaktion des Ethylenoxid wurde die Reaktionsmischung zur Entfernung des nicht umgesetzten Ethylenoxids unter den vorgenannten Reaktionsbedingungen erneut gestrippt, mit Phosphorsäure anschließend neutralisiert und nach bekannten Methoden gereinigt.

Man erhielt ein Blockpolyoxypropylen-polyoxyethylen-polyolgemisch mit einer Hydroxylzahl von 30 und einem Gehalt an endständigen Ethylenoxidgruppen von 5 Gew.-%, bezogen auf das Gewicht der polymerisierten 1,2-Propylenoxideinheiten.

Beispiel 2

Man verfuhr analog den Angaben des Beispiels 1, destillierte jedoch das mit der Kaliumhydroxidlösung eingebrachte und bei der Alkoholatbildung gebildete Wasser in einer solchen Menge ab, daß die Reaktionsmischung Glycerin in Glycerolatform und Wasser im Molverhältnis 2 : 1 enthielt (durchschnittliche Funktionalität der Startermolekülmischung 2,66).

Man erhielt ein Blockpolyoxypropylen-polyoxyethylen-polyolgemisch mit einer Hydroxylzahl von 30 und einem Gehalt von 5 Gew.-%, bezogen auf das Gewicht der polymerisierten 1,2-Propylenoxideinheiten, an endstandigen Ethylenoxideinheiten.

Herstellung von PU-Weichschaumstoffen

Beispiel 3

A-Komponente: Mischung, bestehend aus
72,8 Gew.-Teilen eines mit Glycerin gestarteten Polyoxypropylen-polyoxyethylen-polyols mit einem Gehalt an Oxethyleneinheiten von 75 Gew.-%, bezogen auf das Gesamtsgewicht an polymerisierten 1,2-Propylenoxid und Ethylenoxideinheiten, von denen 5 Gew.% als Block endständig und die restlichen Ethylenoxideinheiten in statischer Verteilung mittelständig gebunden sind,
18,7 Gew.-Teilen Blockpolyoxypropylen-polyoxyethylen-polyolgemisch, hergestellt nach Beispiel 1,
2,8 Gew.-Teilen Ethylenglykol,
2,6 Gew.-Teilen wasser,
0,5 Gew.-Teilen einer 33 gew.-%igen Lösung von Triethylendiamin in Dipropylenglykol,
0,3 Gew.-Teilen 2-(N,N-Dimethylaminoethoxy)ethanol,
0,2 Gew.-Teilen einer 70 gew.-%igen Lösung von Bis-(N,N-dimethylamino-ethyl)ether in Dipropylenglykol,
0,1 Gew.-Teilen Pentamethyldiethylentriamin,
1,0 Gew.-Teilen eines Schaumstabilisators auf Silikonbasis (Tegostab®B 8418 der Firma Goldschmidt AG, Essen) und
1,0 Gew.-Teilen eines Copolymerisats auf der Grundlage von N-Vinylpyrrolidon, Vinylacetat und eines acrylatgruppenhaltigen Polyoxyalkylenglykolesters (Handelsprodukt Tone® TM 100 Acrylat der Firma Union Carbide Corp.) mit einem K-Wert von 20, hergestellt nach der Lehre der DE-A-38 38 030, als Emulgator.

B-Komponente: Roh-MDI mit einem NCO-Gehalt von 31,3 Gew.% und einem Gehalt an MDI-Isomeren von 39 Gew.-%.

100 Gew.-Teile der A-Komponente und 59 Gew.-Teile der B-Komponente, entsprechend einem NCO-Index von 95, wurden bei 23°C 8 Sekunden lang intensiv gemischt.

1200 g der erhaltenen Reaktionsmischung wurden in eine auf 50°C temperiertes, metallisches Formwerkzeug mit den inneren Abmessungen 40 x 40 x 10 cm eingefüllt, das Formwerkzeug geschlossen und die Reaktionsmischung aufschäumen gelassen.

Nach einer Formstandzeit von 3 Minuten wurde der gebildete viskoelastische Formkörper entformt. Er besaß eine Dichte nach DIN 53 420 von 70 g/Liter und nach DIN 53 426 einen E-Modul von 9,3 N/cm$^2$ und einen Verlustfaktor von 1,04.

Beispiel 4

A-Komponente: analog Beispiel 3

B-Komponente: Urethangruppen enthaltende Polyisocyanatmischung mit einem NCO-Gehalt von 28,1 Gew.-%, hergestellt durch Umsetzung von Roh-MDI mit einem MDI-Gehalt von 60 Gew.% und einem Polyoxypropylen-glykol mit einem Molekulargewicht von 400.

100 Gew.-Teile der A-Komponente und 60 Gew.-Teile der B-Komponente, entsprechend einem NCO-Index von 90, wurden analog den Angaben des Beispiels 3 verschäumt.

Nach einer Formstandzeit von 3 Minuten wurde der gebildete viskoelastische Formkörper entformt. Der Formkörper besaß eine Dichte von 72 g/Liter und nach DIN 53 426 einen E-Modul von 11,5 N/cm$^2$ und einen Verlustfaktor von 1,41.

An den Formkörpern, hergestellt nach den Beispielen 3 und 4, wurden ergänzend hierzu folgende mechanische Eigenschaften ermittelt

| Beispiele | 3 | 4 |
|---|---|---|
| Zugfestigkeit nach DIN 53 571 [kPa] | 158 | 198 |
| Dehnung nach DIN 53 571 [%] | 174 | 165 |
| Weiterreißfestigkeit nach DIN 53 575 [N/mm] | 0,57 | 0,65 |
| Druckverformungsrest nach DIN 53 572 [%] | <1 | <1 |

Beispiele 5 bis 8

Man verfuhr analog den Angaben des Beispiels 3, verwendete jedoch anstelle von 2,8 Gew.-Teilen Ethylenglykol als Kettenverlängerungsmitel in
Beispiel 5: 6 Gew.-Teile 1,3-Propandiol,
Beispiel 6: 6 Gew.-Teile 1,4-Butandiol,
Beispiel 7: 6 Gew.-Teile 1,6-Hexandiol und
Beispiel 8: 6 Gew.-Teile 1,7-Heptandiol
An den erhaltenen PU-Formkörpern wurden folgende mechanische und akustische Eigenschaften bestimmt

| Beispiel | 5 | 6 | 7 | 8 |
|---|---|---|---|---|
| Dichte nach DIN 53 420 [g/Liter] | 77 | 74 | 73 | 70 |
| E-Modul nach DIN 53 426 [N/cm$^2$] | 11,2 | 12,9 | 19,2 | 13,9 |
| Verlustfaktor nach DIN 53 426 | 0,73 | 1,03 | 0,92 | 0,96 |
| Druckverformungsrest nach DIN 53 572 [%] | 1,5 | 1,5 | 0,8 | 0,8 |

**Patentansprüche**

1. Verfahren zur Herstellung von flexiblen Polyurethan-Weichschaumstoffen mit einem Verlustfaktor nach DIN 53 426 im Bereich von 0,7 bis 1,5 durch Umsetzung von
   a) mindestens difunktionellen Polyoxyalkylen-polyolen und gegebenenfalls
   b) polyfunktionellen Kettenverlängerungsmitteln mit Molekulargewichten von 18 bis 400 mit
   c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate,
   in Gegenwart von
   d) Katalysatoren,
   e) Treibmitteln, ausgewählt aus der Gruppe Wasser, der organischen Carbonsäuren und gegenüber Polyisocyanaten inerten Flüssigkeiten mit Siedepunkten unter 100 °C,
   sowie gegebenenfalls
   f) Hilfsmitteln und/oder Zusatzstoffen,
   dadurch gekennzeichnet, daß man als Polyoxyalkylen-polyole (a) eine Mischung verwendet aus

ai) einem Blockpolyoxypropylen-polyoxyethylen-polyolgemisch mit einer Hydroxylzahl von 14 bis 65 und einem Gehalt an endständig gebundenen Ethylenoxideinheiten von 2 bis 9 Gew.-% bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt und

aii) mindestens einem di- und/oder trifunktionellen Polyoxypropylen-polyoxyethylen-polyol mit einem Gehalt an Oxyethyleneinheiten von 60 bis 85 Gew.-%, bezogen auf das Gesamtgewicht an polymerisierten Alkylenoxideinheiten, und einer Hydroxylzahl von 20 bis 80.

2. Mehrstufiges Verfahren zur Herstellung von flexiblen Polyurethan-Weichschaumstoffenmit einem Verlustfaktor nach DIN 53 426 im Bereich von 0,7 bis 1,5, dadurch gekennzeichnet, daß man

1. in der ersten Reaktionsstunfe an eine Startermolekülmischung mit einer durchschnittlichen Funktionalität von 2,3 bis 2,8 aus Wasser und Glycerin und/oder Trimethylolpropan in Gegenwart mindestens eines basischen Katalysators bei erhöhter Temperatur 1,2-Propylenoxid und an das erhaltene Polyoxypropylenaddukt Ethylenoxid in einer solchen Menge polymerisiert, daß das erhaltene Blockpolyoxypropylen-polyoxyethylen-polyolgemisch (ai) eine Hydroxylzahl von 14 bis 65 und einen Gehalt an endständig gebundenen Ethylenoxideinheiten von 2 bis 9 Gew.-%, bezogen auf das Gewicht der Polyoxypropyleneinheiten, besitzt,

2. in der zweiten Reaktionsstufe

ai) das erhaltene Blockpolyoxypropylen-polyoxyethylen-polyolgemisch (ai) mit

aii) mindestens einem di- und/oder trifunktionellen Polyoxypropylen-polyoxyethylen-polyol mit einem Gehalt an Oxyethyleneinheiten von 60 bis 85 Gew.-%, bezogen auf das Gesamtgewicht an polymerisierten Alkylenoxideinheiten, und einer Hydroxylzahl von 20 bis 80 und gegebenenfalls

b) polyfunktionellen Kettenverlängerungsmitteln mit Molekulargewichten von 18 bis 400 mischt und

3. in einer dritten Reaktionsstufe die erhaltene Mischung mit

c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate

in Gegenwart von

d) Katalysatoren,

e) Treibmitteln, ausgewählt aus der Gruppe Wasser, der organischen Carbonsäuren und gegenüber Polyisocyanaten inerten Flüssigkeiten mit Siedepunkten unter 100 °C,

sowie gegebenenfalls

f) Hilfsmitteln und/oder Zusatzstoffen

zur Reaktion bringt.

3. Verfahren nach einem der Ansprüche 1 oder 2, dadurch gekennzeichnet, daß das Blockpolyoxypropylen-polyoxyethylen-polyolgemisch (ai) eine Hydroxylzahl von 14 bis 40 und einen Gehalt an endständig gebundenen Ethylenoxideinheiten von 3 bis 8 Gew.-%, bezogen auf das Gewicht der Polyoxypropyleneinheiten, besitzt.

4. Verfahren nach einem der Ansprüche 1 bis 3, dadurch gekennzeichnet, daß die Startermolekülmischung zur Herstellung des Blockpolyoxypropylen-polyoxyethylen-polyolgemisches besteht aus einer Wasser-Glycerin- und/oder Wasser-Trimethylolpropan-Mischung im Molverhältnis 2,3 : 1 bis 1 : 4.

5. Verfahren nach einem der Ansprüche 1 bis 4, dadurch gekennzeichnet, daß man als Polyoxypropylen-polyoxyethylen-polyole (aii) verwendet ein mit Glycerin gestartetes Polyoxypropylen-polyoxyethylen-polyol mit einem Gesamtgehalt an Oxyethyleneinheiten von 70 bis 80 Gew.-%, von denen bis zu 20 Gew.-% endständig gebunden sind und einer Hydroxylzahl von 25 bis 60, wobei die Gew.-% bezogen sind auf das Gesamtgewicht an polymerisierten Alkylenoxideinheiten.

6. Verfahren nach einem der Ansprüche 1 bis 5, dadurch gekennzeichnet, daß man als mindestens difunktionelle Polyoxyalkylen-polyole (a) eine Mischung verwendet, die enthält, bezogen auf das Gesamtgewicht von (a),

ai) 10 bis 90 Gew.-% eines Blockpolyoxypropylen-polyoxyethylen-polyolgemisches mit einer Hydroxylzahl von 14 bis 40 und einem Gehalt an endständig gebundenen Ethylenoxideinheiten von 3 bis 8 Gew.-%, bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt und

aii) 10 bis 90 Gew.-% mindestens eines di- und/oder trifunktionellen Polyoxypropylen-polyoxyethylen-polyols mit einem Gehalt an Oxethyleneinheiten von 60 bis 85 Gew.-%, bezogen auf das Gesamtgewicht an polymerisierten Alkylenoxideinheiten, und einer Hydroxylzahl von 20 bis 80.

7.  Verfahren nach einem der Ansprüche 1 bis 6, dadurch gekennzeichnet, daß man als organische und/oder modifizierte organische Polyisocyanate (c) verwendet:
Mischungen aus 4,4'- und 2,4'-Diphenylmethan-diisocyanat, Mischungen aus Diphenylmethan-diisocyanaten und Polyphenyl-polymethylen-polyisocyanaten mit einem Gehalt an Diphenylmethan-diisocyanaten von mindestens 35 Gew.-%, bezogen auf das Gesamtgewicht, Mischungen aus 4,4'- und 2,4'-Diphenylmethan-diisocyanat und Gemischen aus 2,4- und 2,6-Toluylen-diisocyanat, Mischungen aus Diphenylmethan-diisocyanaten und Polyphenyl-polymethylen-polyisocyanaten und Gemischen aus 2,4- und 2,6-Toluylen-diisocyanaten, Urethangruppen enthaltende Polyisocyanatmischungen mit einem NCO-Gehalt von 28 bis 14 Gew.-%, bezogen auf das Gesamtgewicht, auf der Grundlage von Diphenylmethan-diisocyanaten oder Mischungen aus Diphenylmethan-diisocyanaten und Polyphenyl-polymethylen-polyisocyanaten.

8.  Verfahren nach einem der Ansprüche 1 bis 7, dadurch gekennzeichnet, daß man als Treibmittel (e) Wasser in einer Menge von 0,1 bis 8 Gew-Teilen, bezogen auf 100 Gew.-Teile der Polyoxyalkylen-polyole (a) verwendet.

9.  Verfahren nach einem der Ansprüche 1 bis 8, dadurch gekennzeichnet, daß man als Emulgiermittel (f) ein Copolymerisat mit einem K-Wert von 5 bis 80, gemessen als 0,5 gew.%ige Lösung in Isopropanol bei 25°C, verwendet, das hergestellt wird in Gegenwart von Polymerisationsinitiatoren durch radikalische Polymerisation von

A) 20 bis 80 Gew.%, bezogen auf das Gesamtgewicht der Monomeren (A) und (B), mindestens eines olefinisch ungesättigten Polyoxyalkylenalkohol- oder Polyesteralkoholaddukts,
B) 80 bis 20 Gew.%, bezogen auf das Gesamtgewicht der Monomeren (A) und (B), mindestens eines Vinylmonomeren ausgewählt aus der Gruppe N-Vinyl-formamid, N-Vinyl-2-pyrrolidon` N-Vinyl-2-piperidon,,N-Vinyl-2-caprolactam, N-Vinyl-imidazol, N-Vinyl-2-ethylenharnstoff und N-Vinyl-2-propylenharnstoff,
C) 0,05 bis 40 Gew.-Teilen, bezogen auf 100 Gew.-Teile der Monomeren (A) und (B), Glycidylacrylat, Glycidylmethacrylat oder Mischungen davon,
D) 0 bis 10 Gew.-Teilen, bezogen auf 100 Gew.-Teile der Monomeren (A) und (B), mindestens einer $\alpha,\beta$-monoolefinisch ungesättigten Carbonsäure und
E) 0 bis 30 Gew.-Teilen, bezogen auf 100 Gew.-Teile der Monomeren (A) und (B), mindestens eines olefinisch ungesättigten Carbonsäureamids und/oder -esters und/oder Styrol.

10.  Polyoxyalkylen-polyol-Mischungen, bestehend, bezogen auf das Gesamtgewicht, aus
ai) 10 bis 40 Gew.-% eines Blockpolyoxypropylen-polyoxyethylen-polyolgemisches mit einer Hydroxylzahl von 14 bis 40 und einem Gehalt an endständig gebundenen Ethylenoxideinheiten von 3 bis 8 Gew.-%, bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,7 aus Wasser und Glycerin und Polymerisation von Ethylenoxid an das erhaltene Polyoxypropylenaddukt und
aii) 60 bis 90 Gew.-% mindestens eines di- und/oder trifunktionellen Polyoxypropylen-polyoxyethylen-polyols mit einem Gehalt an Oxethyleneinheiten von 60 bis 85 Gew.-%, von denen bis zu 20 Gew.-% endständig gebunden sind, und einer Hydroxylzahl von 20 bis 80, wobei die Gew.-% bezogen sind auf das Gesamtgewicht an polymerisierten Alkylenoxideinheiten.

11.  Polyoxyalkylen-polyol-Mischungen nach Anspruch 10, dadurch gekennzeichnet, daß die Mischung als Polyoxypropylen-polyoxyethylen-polyol (aii) enthält ein mit Glycerin gestartetes Polyoxypropylen-poly-oxyethylen-polyolmit einem Gehalt an Oxethyleneinheiten von 70 bis 80 Gew.-%, von denen 2 bis 15 Gew.-% endständig gebunden sind, und einer Hydroxylzahl von 25 bis 60, wobei die Gew.-% bezogen sind auf das Gesamtgewicht an polymerisierten Alkylenoxideinheiten.

**Claims**

1. A process for the preparation of flexible, soft polyurethane foams having a loss factor according to DIN 53 426 in the range from 0.7 to 1.5, by reacting
   a) polyoxyalkylene-polyol which has a functionality of two or more and, if desired,
   b) a polyfunctional chain extender having a molecular weight of from 18 to 400 with
   c) organic polyisocyanates and/or modified organic polyisocyanates selected from the group consisting of ester-, urea-, biuret-, allophanate-, isocyanurate-, carbodiimide-, uretonimine- and/or urethane-containing diisocyanates and/or polyisocyanates,
   in the presence of
   d) catalysts,
   e) blowing agents selected from the group consisting of water, organic carboxylic acids and liquids which are inert toward polyisocyanates and have boiling points below 100°C,
   and, if desired,
   f) auxiliaries and/or additives,
   wherein the polyoxyalkylene-polyol (a) used is a mixture of
   ai) a block polyoxypropylene-polyoxyethylene-polyol mixture having a hydroxyl number of from 14 to 65 and containing from 2 to 9 % by weight of terminal ethylene oxide units, based on the weight of the polyoxypropylene units, and prepared by anionic polymerization, at elevated temperature, of 1,2-propylene oxide onto an initiator molecule mixture, having a mean functionality of from 2.3 to 2.8, of water and glycerol and/or trimethylolpropane, and polymerization of ethylene oxide onto the resultant polyoxypropylene adduct, and
   aii) one or more difunctional and/or trifunctional polyoxypropylene-polyoxyethylene-polyols containing from 60 to 85 % by weight of oxyethylene units, based on the total weight of polymerized alkylene oxide units, and having a hydroxyl number of from 20 to 80.

2. A multistep process for the preparation of a flexible, soft polyurethane foam having a loss factor according to DIN 53 426 in the range from 0.7 to 1.5, wherein
   1. in the first reaction step, 1,2-propylene oxide is polymerized onto an initiator molecule mixture, having a mean functionality of from 2.3 to 2.8, of water and glycerol and/or trimethylolpropane in the presence of one or more basic catalysts at elevated temperature, and ethylene oxide is polymerized onto the resultant polyoxypropylene adduct in such an amount that the resultant block polyoxypropylene-polyoxyethylene-polyol mixture (ai) has a hydroxyl number of from 14 to 65 and contains from 2 to 9 % by weight of terminal ethylene oxide units, based on the weight of the polyoxypropylene units,
   2. in the second reaction step,
      ai) the resultant block polyoxypropylene-polyoxyethylene-polyol mixture (ai) is mixed with
      aii) one or more difunctional and/or trifunctional polyoxypropylene-polyoxyethylene-polyols containing from 60 to 85 % by weight of oxyethylene units, based on the total weight of polymerized alkylene oxide units, and having a hydroxyl number of from 20 to 80, and, if desired,
      b) a polyfunctional chain extender having a molecular weight of from 18 to 400, and
   3. in a third reaction step, the resultant mixture is reacted with
      c) organic polyisocyanates and/or modified organic polyisocyanates selected from the group consisting of ester-, urea-, biuret-, allophanate-, isocyanurate-, carbodiimide-, uretonimine- and/or urethane-containing diisocyanates and/or polyisocyanates,
      in the presence of
      d) catalysts,
      e) blowing agents selected from the group consisting of water, organic carboxylic acids and liquids which are inert toward polyisocyanates and have boiling points below 100°C,
      and, if desired,
      f) auxiliaries and/or additives.

3. A process as claimed in claim 1 or 2, wherein the block polyoxypropylene-polyoxyethylene-polyol mixture (ai) has a hydroxyl number of from 14 to 40 and contains from 3 to 8 % by weight of terminal ethylene oxide units, based on the weight of the polyoxypropylene units.

4. A process as claimed in claim 1 or 2 or 3, wherein the initiator molecule mixture for the preparation of the block polyoxypropylene-polyoxyethylene-polyol mixture comprises a water/glycerol and/or water/trimethylolpropane mixture in the molar ratio from 2.3:1 to 1:4.

5. A process as claimed in claim 1 or 2 or 3 or 4, wherein the polyoxyproplyene-polyoxyethylene-polyol (aii) used is a polyoxypropylene-polyoxyethylene-polyol initiated using glycerol and containing a total of from 70 to 80 % by weight of oxyethylene units, of which up to 20 % by weight are terminal, and having a hydroxyl number of from 25 to 60, the percentages by weight being based on the total weight of polymerized alkylene oxide units.

6. A process as claimed in claim 1 or 2 or 3 or 4 or 5, wherein the polyoxyalkylene-polyol (a) which has a functionality of two or more is a mixture which contains, based on the total weight of (a),

ai) from 10 to 90 % by weight of a block polyoxypropylene-polyoxyethylene-polyol mixture having a hydroxyl number of from 14 to 40 and containing from 3 to 8 % by weight of terminal ethylene oxide units, based on the weight of the polyoxypropylene units, and prepared by anionic polymerization, at elevated temperature, of 1,2-propylene oxide onto an initiator molecule mixture, having a mean functionality of from 2.3 to 2.8, of water and glycerol and/or trimethylolpropane, and polymerization of ethylene oxide onto the resultant polyoxypropylene adduct, and

aii) from 10 to 90 % by weight of one or more difunctional and/or trifunctional polyoxypropylene-polyoxyethylene-polyols containing from 60 to 85 % by weight of oxyethylene units, based on the total weight of polymerized alkylene oxide units, and having a hydroxyl number of from 20 to 80.

7. A process as claimed in claim 1 or 2 or 3 or 4 or 5 or 6, wherein the organic and/or modified organic polyisocyanate (c) used is:

a mixture of 4,4'- and 2,4'-diphenylmethane diisocyanates, a mixture of diphenylmethane diisocyanates and polyphenyl-polymethylene polyisocyanates containing 35 % by weight or more of diphenylmethane diisocyanates, based on the total weight, a mixture of 4,4'- and 2,4'-diphenylmethane diisocyanate and a mixture of 2,4- and 2,6-tolylene diisocyanate, a mixture of diphenylmethane diisocyanates and polyphenyl-polymethylene polyisocyanates, and a mixture of 2,4- and 2,6-tolylene diisocyanates, a urethane-containing polyisocyanate mixture having an NCO content of from 28 to 14 % by weight, based on the total weight, on the basis of diphenylmethane diisocyanates or a mixture of diphenylmethane diisocyanates and polyphenyl-polymethylene polyisocyanates.

8. A process as claimed in claim 1 or 2 or 3 or 4 or 5 or 6 or 7, wherein the blowing agent (e) used is water in an amount of from 0.1 to 8 parts by weight, based on 100 parts by weight of the polyoxyalkylenepolyol (a).

9. A process as claimed in claim 1 or 2 or 3 or 4 or 5 or 6 or 7 or 8, wherein the emulsifier (f) used is a copolymer having a K value of from 5 to 80, measured as a 0.5 % strength by weight solution in isopropanol at 25 °C, prepared in the presence of a polymerization initiator by free-radical polymerization of

A) from 20 to 80 % by weight, based on the total weight of monomers (A) and (B), of one or more olefinically unsaturated polyoxyalkylene-alcohol adducts or polyester-alcohol adducts,

B) from 80 to 20 % by weight, based on the total weight of monomers (A) and (B), of one or more vinyl monomers selected from the group comprising N-vinylformamide, N-vinyl-2-pyrrolidone, N-vinyl-2-piperidone, N-vinyl-2-caprolactam, N-vinylimidazole, N-vinyl-2-ethyleneurea and N-vinyl-2-propyleneurea,

C) from 0.05 to 40 parts by weight, based on 100 parts by weight, of monomers (A) and (B), of glycidyl acrylate, glycidyl methacrylate or mixtures thereof,

D) from 0 to 10 parts by weight, based on 100 parts by weight of monomers (A) and (B), of one or more $\alpha,\beta$-monoolefinically unsaturated carboxylic acids, and

E) from 0 to 30 parts by weight, based on 100 parts by weight of monomers (A) and (B), of one or more olefinically unsaturated carboxamides and/or carboxylates and/or styrenes.

10. A polyoxyalkylene-polyol mixture comprising, based on the total weight,

ai) from 10 to 40 % by weight of a block polyoxypropylene-polyoxyethylene-polyol mixture having a hydroxyl number of from 14 to 40 and containing from 3 to 8 % by weight of terminal ethylene oxide units, based on the weight of the polyoxypropylene units, and prepared by anionic polymerization, at elevated temperature, of 1,2-propylene oxide onto an initiator molecule mixture, having a mean functionality of from 2.3 to 2.7, of water and glycerol, and polymerization of ethylene oxide onto the resultant polyoxypropylene adduct, and

aii) from 60 to 90 % by weight of one or more difunctional and/or trifunctional polyoxypropylene-polyoxy-ethylene-polyols containing from 60 to 85 % by weight of oxyethylene units, of which up to 20 % by weight are terminal, and having a hydroxyl number of from 20 to 80, the percentages by weight being based on the total weight of polymerized alkylene oxide units.

**11.** A polyoxyalkylene-polyol mixture as claimed in claim 10, wherein the mixture contains, as the polyoxypropylene-polyoxyethylene-polyol (aii), a polyoxypropylene-polyoxyethylene-polyol initiated using glycerol and containing from 70 to 80 % by weight of oxyethylene units, of which from 2 to 15 % by weight are terminal, and having a hydroxyl number of from 25 to 60, the percentages by weight being based on the total weight of polymerized alkylene oxide units.

**Revendications**

**1.** Procédé de préparation de matières plastiques souples, élastiques, en polyuréthanne, d'un facteur de pertes suivant DIN 53 426 compris entre 0,7 et 1,5, par réaction

a) de polyoxyalkylène-polyols au moins bifonctionnels et, le cas échéant,

b) de prolongateurs de chaîne polyfonctionnels présentant des poids moléculaires compris entre 18 et 400, avec

c) des polyisocyanates organiques et/ou des polyisocyanates organiques modifiés, choisis dans le groupe constitué des di- et/ou polyisocyanates contenant des groupes ester, urée, biuret, allophanate, isocyanurate, carbodiimide, urétonimine et/ou uréthane,

en présence de

d) catalyseurs,

e) gonflants, choisis dans le groupe constitué d'eau, d'acides carboxyliques organiques et de liquides inertes vis-à-vis des polyisocyanates, aux points d'ébullition inférieurs à 100°C,

ainsi qu'éventuellement

f) d'agents auxiliaires et/ou d'additifs,

caractérisé par le fait que l'on utilise comme polyoxyalkylène-polyols (a), un mélange composé

ai) d'un mélange de polyoxypropylène obtenu par réaction dans la masse-polyoxéthylène-polyol, d'un indice hydroxyle de 14 à 65 et d'une teneur en unités éthylènoxyde terminales de 2 à 9 % en poids, rapportée au poids des unités polyoxypropylène, qui est préparé par polymérisation anionique à température élevée de 1,2-propylènoxyde sur un mélange de molécules d'amorçage ayant 2,3 à 2,8 fonctions en moyenne, composé d'eau et de glycérol et/ou de triméthylolpropane, et polymérisation d'éthylènoxyde sur le produit d'addition de polyoxypropylène obtenu, et

aii) d'au moins un polyoxypropylène-polyoxéthylène-polyol bi- et/ou trifontionnel, d'une teneur en unités oxéthylène de 60 à 85 % en poids, rapportée au poids total d'unités alkylènoxyde polymérisés, et d'un indice hydroxyle de 20 à 80.

**2.** Procédé à plusieurs stades pour la préparation de produits alvéolaires souples, élastiques, de polyuréthanne, d'un facteur de pertes selon DIN 53 426 compris entre 0,7 et 1,5, caractérisé par le fait que

1. dans le premier stade de réaction, on polymérise, en présence d'au moins un catalyseur basique, à température élevée, du 1,2-propylènoxyde sur un mélange de molécules d'amorçage à 2,3 à 2,7 fonctions en moyenne, composé d'eau et de glycérol et/ou de triméthylolpropane, et on polymérise, sur le produit d'addition de polyoxypropylène ainsi obtenu, de l'éthylènoxyde en quantité telle que le mélange de polyoxypropylène obtenu par réaction dans la massepolyoxéthylène-polyol (ai) présente un indice hydroxyle de 14 à 65 et une teneur en unités éthylènoxyde terminales de 2 à 9 % en poids, rapportées au poids des unités polyoxypropylène,

2. dans le deuxième stade de réaction

ai) on mélange le mélange de polyoxypropylène obtenu par réaction dans la masse polyoxéthylène-polyol (ai) avec

aii) au moins un polyoxypropylène-polyoxéthylène-polyol bi- et/ou bifonctionnel, d'une teneur en unités oxéthylène de 60 à 80 % en poids, rapportée au poids total des unités alkylènoxyde polymérisées, et d'un indice hydroxyle de 20 à 80 et, éventuellement,

b) des prolongateurs de chaîne polyfonctionnels aux poids moléculaires compris entre 18 et 400, et

3. dans un troisième stade de réaction, on met à réagir le mélange résultant avec

c) des polyisocyanates organiques et/ou des polyisocyanates organiques modifiés, choisis dans le groupe des di- et/ou polyisocyanates contenant des groupes ester, urée, biuret, allophate, isocyanurate, carbodiimide, urétonimine et/ou uréthane,

en présence de

d) catalyseurs,

e) gonflants, choisis dans le groupe constitué d'eau, d'acides carboxyliques organiques et de liquides inertes vis-à-vis des polyisocyanates, aux points d'ébullition inférieurs à 100°C,

ainsi qu'éventuellement

f) d'agents auxiliaires et/ou d'additifs.

3. Procédé selon l'une des revendications 1 ou 2, caractérisé par le fait que le mélange de polyoxypropylène obtenu par réaction dans la masse-polyoxéthylène-polyol (ai) présente un indice hydroxyle de 14 à 40 et une teneur en unités éthylènoxyde terminales de 3 à 8 % en poids, rapportées au poids des unités polyoxypropylène.

4. Procédé selon l'une des revendications 1 à 3, caractérisé par le fait que le mélange de molécules d'amorçage pour la préparation du mélange de polyoxypropylène obtenu par réaction dans la masse-polyoéthylène-polyol est composé d'un mélange d'eau/glycérol et/ou d'eau/triméthylolpropane en un rapport molaire de compris entre 2,3/1 et 1/4.

5. Procédé selon l'une des revendications 1 à 4, caractérisé par le fait que l'on utilise, comme polyoxypropylène-polyoxéthylène-polyols (aii), un polyoxypropylène-polyoxéthylène-polyol amorcé avec du glycérol, contenant au total 70 à 80 % en poids d'unités oxéthylène dont jusqu'à 20 % en poids sont liés en position terminale, et présentant un indice hydroxyle de 25 à 60, les pourcentages en poids se rapportant au poids total des unités alkylènoxyde polymérisées.

6. Procédé selon l'une des revendications 1 à 5, caractérisé par le fait que l'on utilise, comme polyoxyalkylène-polyols (a) au moins bifonctionnels, un mélange contenant, rapporté au poids total de (a),

ai) 10 à 90 % en poids d'un mélange de polyoxypropylène obtenu par réaction dans la masse-polyoxéthylène-polyol, d'un indice hydroxyle de 14 à 40 et d'une teneur en unités éthylènoxyde terminales de 3 à 8 % en poids, rapportés au poids des unités polyoxypropylène, qui est préparé par polymérisation anionique à température élevée de 1,2-propylènoxyde sur un mélange de molécules d'amorçage à 2,3 à 2,8 fonctions en moyenne, composé d'eau et de glycérol et/ou de triméthylolpropane, et polymérisation d'éthylènoxyde sur le produit d'addition de polyoxypropylène obtenu et

aii) 10 à 90 % en poids d'au moins un polyoxypropylène-polyoxéthylène-polyol bi- et/ou trifonctionnel, d'une teneur en unités oxéthylène de 60 à 85 % en poids, rapportés au poids total des unités alkylènoxyde polymérisées, et d'un indice hydroxyle de 20 à 80.

7. Procédé selon l'une des revendications 1 à 6, caractérisé par le fait que l'on utilise, comme polyisocyanates organiques et/ou polyisocyanates organiques modifiés (c) :

des mélanges de 4,4'- et 2,4'-diphénylméthane-diisocyanate, des mélanges de diphénylméthane-diisocyanates et de polyphénylpolyméthylène-polyisocyanates d'une teneur en diphénylméthane-diisocyanates d'au moins 35 % en poids, rapportée au poids total, des mélanges composés de 4,4'- et 2,4'-diphénylméthane-diisocyanate et de mélanges de 2,4- et 2,6-toluylène-diisocyanate, des mélanges composés de diphénylméthane-diisocyanates et de polyphényl-polyméthylène-polyioxyanates et de mélanges de 2,4- et 2,6-toluylène-diisocyanates, des mélanges de polyisocyanates contenant des groupes uréthane, d'une teneur en NCO de 28 à 14 % en poids, rapportée au poids total, à base de diphénylméthane-diisocyanates ou de mélanges de diphénylméthane-diisocyanates et de polyphényl-polyméthylène-polyisocyanates.

8. Procédé selon l'une des revendications 1 à 7, caractérisé par le fait que l'on utilise, comme gonflant (e), de l'eau en une quantité de 0,1 à 8 parties en poids pour 100 parties en poids des polyoxalkylène-polyols (a).

**9.** Procédé selon l'une des revendications 1 à 8, caractérisé par le fait que l'on utilise, comme émulsifiant (f), un copolymérisat d'un indice K de 5 à 80, mesuré en solution à 0,5 % en poids dans de l'isopropanol, à 25°C, et préparé, en présence de sensibilisateurs de polymérisation, par polymérisation radicalaire de

A) 20 à 80 % en poids, rapportés au poids total des monomères (A) et (B), d'au moins un produit d'addition de polyoxalkylène-alcool ou polyester-alcool à insaturation oléfinique,

B) 80 à 20 % en poids, rapportés au poids total des monomères (A) et (B), d'au moins un monomère vinylique, choisi dans le groupe constitué de N-vinyl-formamide, N-vinyl-2-pyrrolidone, N-vinyl-2-pipéridone, N-vinyl-2-caprolactame, N-vinyl-imidazole, N-vinyl-2-éthylène-urée et N-vinyl-2-propylène-urée,

C) 0,05 à 40 parties en poids pour 100 parties en poids des monomères (A) et (B), de glycidylacrylate, glycidylméthacrylate ou leurs mélanges,

D) 0 à 10 parties en poids pour 100 parties en poids des monomères (A) et (B) d'au moins un acide carboxylique à insaturation $\alpha,\beta$-monooléfinique et

E) 0 à 30 parties en poids pour 100 parties en poids des monomères (A) et (B) d'au moins un amide et/ou ester d'acide carboxylique à insaturation oléfinique et/ou de styrène.

**10.** Mélanges de polyoxalkylène-polyols composés, rapporté au poids total de

ai) 10 à 40 % en poids d'un mélange de polyoxypropylène obtenu par réaction dans la masse-polyoxéthylène-polyol, d'un indice hydroxyle de 14 à 40 et d'une teneur en unités éthylènoxyde terminales de 3 à 8 % en poids, rapportés au poids des unités polyoxypropylène, qui est préparé par polymérisation anionique à température élevée de 1,2-propylènoxyde sur un mélange de molécules d'amorçage à 2,3 à 2,7 fonctions en moyenne, composé d'eau et de glycérol, et par polymérisation d'éthylènoxyde sur le produit d'addition de polyoxypropylène obtenu, et

aii) 60 à 90 % en poids d'au moins un polyoxypropylène-polyoxéthylène-polyol bi- et/ou trifonctionnel, d'une teneur en unités oxéthylène de 60 à 85 % en poids, dont jusqu'à 20 % en poids sont liés en position terminale, et d'un indice hydroxyle de 20 à 80, les pourcentages en poids se rapportant au poids total des unités alkylènoxyde polymérisées.

**11.** Mélanges de polyoxalkylène-polyols selon la revendication 10, caractérisés par le fait que le mélange contient, comme polyoxypropylène-polyoxéthylène-polyol (aii), un polyoxyporpylène-polyoxéthylène-polyol amorcé avec du glycérol, d'une teneur en unités oxéthylène de 70 à 80 % en poids dont 2 à 15 % en poids sont liés en position terminale, et d'un indice hydroxyle de 25 à 60, les pourcentages en poids se rapportant au poids total des unités alkylènoxyde polymérisées.